# EUROPÄISCHE PATENTSCHRIFT

(11) **EP 2 278 156 B1**
(45) Veröffentlichungstag und Bekanntmachung des Hinweises auf die Patenterteilung: **14.11.2012**
(21) Anmeldenummer: 09009471.5
(22) Anmeldetag: 22.07.2009
(51) Int. Cl.: F03B 17/06

(54) **Wasserkraftanlage zum Erzeugen elektrischer Energie**
Hydropower facility for generating electrical energy
Centrale hydraulique destinée à produire de l'énergie électrique

(43) Veröffentlichungstag der Anmeldung: 26.01.2011
(73) Patentinhaber: Rehart GmbH, 91725 Ehingen (DE)
(72) Erfinder: Wolff, Gerhard Dipl.-Ing., 91550 Dinkelsbühl (DE); Habermann, Christian, 91596 Burk (DE); Zeiler, Georg, 91469 Hagenbüchach (DE)
(74) Vertreter: Nunnenkamp, Jörg

(56) Entgegenhaltungen:
- EP-A2- 1 930 597
- WO-A1-2009/093909
- WO-A2-2004/061294
- US-A- 1 371 836
- US-A- 4 843 249

## Beschreibung

Die Erfindung betrifft ein Verfahren zum Betrieb einer Wasserkraftanlage im Zuge der Erzeugung elektrischer Energie durch Umwandlung von Strömungsenergie eines strömenden Gewässers, wobei die Wasserkraftanlage mit wenigstens einer Rotoreinheit und einem von der Rotoreinheit angetriebenen Generator ausgerüstet ist, wobei ferner ein Trog vorgesehen ist, welcher die Rotoreinheit ganz oder teilweise umschließt, und wobei die Rotoreinheit um zumindest einen Drehpunkt unter Einstellung eines variierenden Aufstellwinkels zwischen einem Oberwasserspiegel und einem Unterwasserspiegel schwenkbar gelagert ist.

Wasserkraftanlagen zum Erzeugen elektrischer Energie sind in vielfältiger Art und Weise bekannt, wozu nur beispielhaft auf die EP 2 003 332 A1 der Anmelderin verwiesen sei. Ihr Grundprinzip macht von der archimedischen Schraube als Rotoreinheit Gebrauch, wie sie in der gattungsbildenden DE 41 39 134 A1 vorgestellt wird.

Zum Erzeugen elektrischer Energie wird der Rotoreinheit bzw. Wasserkraftschnecke an ihrem oberen Ende Wasser zugeführt, welches mit dem dortigen Oberwasserspiegel zur Verfügung steht. Unter der Einwirkung der Schwerkraft bewegt sich das Wasser innerhalb der Wasserkraftschnecke abwärts und versetzt diese dadurch in Drehung. Am unteren Ende verlässt das Wasser die Wasserkraftschnecke unter Berücksichtigung des dort vorliegenden Unterwasserspiegels. Jedenfalls lässt sich auf diese Weise die im Wasser enthaltene Energie bzw. Lageenergie in Bewegungsenergie umwandeln, die dann mit Hilfe des Generators in die gewünschte elektrische Energie umgesetzt wird.

Beim Stand der Technik nach der EP 1 930 597 A2 wird so vorgegangen, dass die bekannte Wasserkraftanlage mit ihrem Trog um einen festen Drehpunkt schwenkbar gelagert ist. Zusätzlich sorgt eine Stelleinrichtung dafür, dass der Aufstellwinkel verändert werden kann.

Die US 1 371 836 beschäftigt sich mit einer Wasserkraftanlage, bei welcher eine Rotoreinheit mit einer Welle vorgesehen ist, die einzelne Flügel trägt. An der Welle sind Hohlkörper angebracht, die sich über Einlassventile im Hinblick auf ihre Auftriebskraft verändern lassen.

Beim Stand der Technik entsprechend der DE 41 39 134 A1, von welcher die Erfindung ausgeht, fließt das Wasser vom Oberwasserspiegel in das obere Ende eines die Rotoreinheit ganz oder teilweise umschließenden Troges zum unteren Ende bzw. zum Unterwasserspiegel. Dabei wird das Wasser durch die Schneckengänge der Rotoreinheit bzw. deren Schneckenkörper in einzelne Gangfüllungen unterteilt. Die Gangfüllungen werden vom Trog und je zwei Gängen des Schneckenkörpers begrenzt und gleiten unter Einwirkung der Schwerkraft im Trog abwärts. Dabei wird eine Schubkraft auf die einzelnen Gänge ausgeübt, welche die Schnecke bzw. deren Schneckenkörper in Drehung versetzt.

Da das auf diese Weise entstehende Drehmoment vom Gewicht der jeweiligen Gangfüllung abhängt, wird im Rahmen der bekannten Lehre zur Regelung des vorerwähnten Drehmomentes und der Leistung der Inhalt der Gangfüllung mit einem Regler verändert. D. h., die abzugebende Leistung wird sowohl bei gleichbleibender als auch bei veränderlicher Drehzahl durch Änderung der Gangfüllung geregelt. Letztlich erfolgt an dieser Stelle also eine Art Drehzahlregelung. Im Rahmen dieser Drehzahlregelung wird oftmals in der Praxis ein Frequenzumrichter eingesetzt, um die erzeugte elektrische Energie an ein Netz zur Einspeisung anzupassen. Durch die notwendige Drehzahlregelung kommt es an dem Frequenzumrichter zu zwangsläufigen elektrischen Energieverlusten. Das ist insofern nachteilig, weil hierdurch der erzielbare elektrische Ertrag negativ beeinflusst wird.

Ganz abgesehen davon kann die bisherige simple Drehzahlregelung häufig zu beobachtenden Schwankungen der Wasserspiegel und/oder der zuströmenden Wassermenge nicht oder nicht in gebührendem Maße Rechnung tragen. Als Folge hiervon ist der gesamte Ertrag an erzeugter elektrischer Energie der bekannten Wasserkraftanlage verbesserungsbedürftig. Zwar wird an dieser Stelle grundsätzlich die Möglichkeit angesprochen, die Schnecke durch Schwenkung, Hebung, Senkung und Verschiebung an wechselnde Unter- und Oberwasserstände anpassen zu können. Das erfolgt allerdings und offensichtlich rein manuell und wird den heutigen Anforderungen an eine besonders effiziente Energieerzeugung nicht mehr gerecht. Hier setzt die Erfindung ein.

Der Erfindung liegt das technische Problem zugrunde, ein derartiges Verfahren zum Betrieb einer Wasserkraftanlage so weiter zu entwickeln, dass der Ertrag an elektrischer Energie bei zugleich einfachem Aufbau und problemloser Funktionsweise gesteigert ist.

Zur Lösung dieser technischen Problemstellung ist ein gattungsgemäßes Verfahren zum Betrieb einer Wasserkraftanlage im Rahmen der Erfindung dadurch gekennzeichnet, dass nicht nur der Aufstellwinkel, sondern auch eine Eintauchtiefe des Troges in das Unterwasser im Sinne einer Regelung eingestellt werden. Nach vorteilhafter Ausgestaltung kann auch die zuströmende Wassermenge im Sinne einer Regelung eingestellt werden. Aufstellwinkel meint im Rahmen der Erfindung denjenigen Winkel, welchen die Wasserkraftanlage insgesamt bzw. deren Rotoreinheit mit einer Horizontalen einschließt. Berücksichtigt man, dass das Wasser vom Oberwasserspiegel durch einen die Rotoreinheit ganz oder teilweise umschließenden Trog durch den Trog bis zum Unterwasserspiegel strömt, so wird der fragliche Aufstellwinkel - bei angenommen paralleler Anordnung von Oberwasserspiegel und Unterwasserspiegel - sowohl mit dem Oberwasserspiegel als auch dem Unterwasserspiegel eingeschlossen, die insoweit die Horizontale darstellen oder festlegen.

Im Rahmen der Erfindung erfolgt nun eine Regelung des Aufstellwinkels - im Gegensatz zum Stand der Technik nach der DE 41 39 134 A1, welcher allenfalls eine manuelle nicht regelnde Änderung des Aufstellwinkels beschreibt. Dabei erfolgt die Regelung für den Aufstellwinkel vorzugsweise durch Vergleich mit einer Führungsgröße. Der Aufstellwinkel stellt also die zu regelnde Größe bzw. Regelgröße dar, welche an die Führungsgröße angepasst wird.

Der eigentliche und erfindungsgemäß ablaufende Regelungsvorgang oder die Regelung sieht nun so aus, dass die zu regelnde Größe - also der Aufstellwinkel - fortlaufend erfasst und mit der Führungsgröße verglichen wird. In Abhängigkeit vom Ergebnis dieses Vergleichs wird die Regelgröße - der Aufstellwinkel - an die vorgegebene Führungsgröße im Sinne einer Angleichung angepasst. Der sich dabei ergebende Wirkungsablauf findet in einem geschlossenen Kreis, dem Regelkreis, statt. Dadurch kann trotz gegebenenfalls störender Einflüsse von außen, also beispielsweise einer Variation des Oberwasserspiegels und/oder Unterwasserspiegels, der Wert der Regelgröße (der Aufstellwinkel) an diese Änderungen angepasst werden.

Denn aus beispielsweise einer Variation des Oberwasserspiegels und/oder des Unterwasserspiegels resultiert meistens eine abgeänderte Führungsgröße für den Aufstellwinkel, an welche dieser angepasst wird. Die betreffende Führungsgröße wird in der Regel aus einer oder mehreren Messgrößen abgeleitet.

Bei diesen Messgrößen kann es sich beispielsweise um den bereits angesprochenen Oberwasserspiegel und/oder den Unterwasserspiegel handeln. Es ist aber auch möglich, eine Höhendifferenz zwischen dem Oberwasserspiegel und dem Unterwasserspiegel als Messgröße zu berücksichtigen. Außerdem mag die zuströmende Wassermenge als Messgröße Eingang in die Bestimmung der Führungsgröße finden. Des Weiteren ist es denkbar, auf den Ertrag an elektrischer Energie als Messgröße zurückzugreifen. Dabei können die vorerwähnten jeweiligen Messgrößen einzeln oder kumulativ herangezogen werden, um hieraus eine Führungsgröße, also einen Sollwert für den Aufstellwinkel, abzuleiten.

In Abhängigkeit von diesem Sollwert für den Aufstellwinkel wird nun im Rahmen der Erfindung der tatsächliche Aufstellwinkel (Istwert für den Aufstellwinkel) im Sinne einer Regelung angepasst. Das kann beispielsweise so geschehen, dass die vorerwähnte Wasserkraftanlage mit einer oder mehreren Stelleinrichtungen ausgerüstet ist. Diese eine oder die mehreren Stelleinrichtungen mögen an dem Trog angreifen. Außerdem ist es denkbar, ein oder mehrere zusätzliche Führungseinrichtungen für den Trog zu realisieren. So oder so lässt sich je nach abgeleiteter Führungsgröße der Aufstellwinkel der Rotoreinheit und somit der Wasserkraftanlage im Ganzen beispielsweise mit Hilfe der einen oder mittels der mehreren Stelleinrichtungen je nach abgeleiteter Führungsgröße regelnd vorgeben und einstellen.

Diese Vorgehensweise erfolgt meistens im Rahmen eines elektronisch arbeitenden Regelkreises. Dieser elektronisch arbeitende Regelkreis verfügt üblicherweise über wenigstens einen Sensor, mit dessen Hilfe beispielsweise der Unterwasserspiegel und/oder der Oberwasserspiegel und/oder die Höhendifferenz zwischen dem Oberwasserspiegel und dem Unterwasserspiegel und/oder die zuströmende Wassermenge und/oder der Ertrag beispielhaft erfasst werden. Zusätzlich ist bei dem elektronisch arbeitenden Regelkreis vorteilhaft eine Regeleinheit vorgesehen, an welche der Sensor angeschlossen ist. Die Regeleinheit gibt nun unter Berücksichtigung von Eingangswerten des Sensors die Führungsgröße für den Aufstellwinkel vor. In Abhängigkeit von dieser Führungsgröße für den Aufstellwinkel wird dann die eine oder werden die mehreren Stelleinrichtungen so beaufschlagt, dass der Aufstellwinkel an den Soll-Aufstellwinkel bzw. die Führungsgröße angepasst wird. Das geschieht durch einen Soll-Istwertvergleich bei der Einstellung des Aufstellwinkels.

Dabei können nicht nur die von dem Sensor erfassten und gemessenen Eingangswerte berücksichtigt werden. Sondern in der Regeleinheit mögen darüber hinaus charakteristische Daten abgelegt werden. Diese charakteristischen Daten kennzeichnen beispielhaft die jeweils im Einsatz befindliche Wasserkraftanlage, beispielsweise dahingehend, welcher Ertrag an elektrischer Energie in Abhängigkeit vom Aufstellwinkel erzeugt wird. Außerdem spiegeln die charakteristischen Daten weitere Parameter wie beispielsweise den Einfluss der zuströmenden Wassermenge auf den Ertrag an elektrischer Energie etc. wider.

So oder so wird die Regelung im Allgemeinen so vorgenommen, dass unter Berücksichtigung der variierenden ein oder mehreren Messgrößen der Aufstellwinkel so eingestellt wird, dass bei diesen Verhältnissen der maximal mögliche Ertrag beobachtet wird bzw. der Ertrag möglichst nicht sinkt. Schwankt beispielsweise der Unterwasserspiegel, so wird der Aufstellwinkel im Kern so im Sinne der Regelung verändert, dass der Ertrag weitestgehend konstant bleibt. Hierbei berücksichtigt die Erfindung den Umstand, dass tendenziell ein kleinerer Aufstellwinkel zu einem verminderten Ertrag an elektrischer Energie korrespondiert. Um nun diesen verminderten Ertrag an elektrischer Energie zumindest teilweise auszugleichen, kann nicht nur der Aufstellwinkel im Sinne einer Regelung eingestellt werden, sondern zusätzlich oder alternativ eine Zuflussmenge an beispielsweise Wasser am oberen Ende der Wasserkraftanlage bzw. am Oberwasserspiegel.

D. h., erfindungsgemäß werden der Aufstellwinkel der Rotoreinheit und die Zuflussmenge vorzugsweise am Oberwasserspiegel jeweils im Sinne einer Regelung eingestellt. Dabei wird zusammenfassend das Ziel verfolgt, durch Variation des Aufstellwinkels und der Zuflussmenge im Sinne der Regelung den Ertrag an elektrischer Energie möglichst konstant zu halten bzw. einen unter den gegebenen Umständen maximalen Ertrag an elektrischer Energie zu erzielen.

Auch die Zuflussmenge und deren Regelung erfolgt in Abhängigkeit einer Führungsgröße für die Zuflussmenge. Diese Führungsgröße für die Zuflussmenge mag - wie die Führungsgröße für den Aufstellwinkel - erneut aus den bereits beschriebenen charakteristischen Daten bzw. den erfassten Messgrößen abgeleitet werden. Jedenfalls ermöglicht die Erfindung eine flexible Anpassung der beschriebenen Wasserkraftanlage an unterschiedliche Bedingungen. Durch die Regelung des Aufstellwinkels und gegebenenfalls der Zuflussmenge können beispielsweise Änderungen des Oberwasserspiegels und/oder des Unterwasserspiegels und/oder der Höhendifferenz zwischen dem Oberwasserspiegel und dem Unterwasserspiegel und/oder der zuströmenden Wassermenge und/oder des Ertrages an elektrischer Energie in dem Sinne aufgefangen werden, dass unter Berücksichtigung der zugleich hinterlegten charakteristischen Daten regelmäßig der erzeugte Ertrag an elektrischer Energie auf ein unter diesen Umständen maximales Ergebnis eingestellt wird. Das kann im Rahmen der beschriebenen elektronischen Regelung erfolgen.

Alternativ oder zusätzlich ist aber auch eine Regelung im Rahmen eines mechanisch arbeitenden (geschlossenen) Regelkreises denkbar. Dabei verfügt der mechanisch arbeitende Regelkreis im Allgemeinen über einen Schwimmkörper, mit dessen Hilfe der Aufstellwinkel der Rotoreinheit in Abhängigkeit von beispielsweise dem Oberwasserspiegel und/oder dem Unterwasserspiegel variiert wird. Das geschieht im Allgemeinen im Sinne einer Selbstregelung. Zu diesem Zweck mag der fragliche Schwimmkörper in den die Rotoreinheit ganz oder teilweise umschließenden Trog integriert sein.

Hier hat es sich bewährt, wenn der Schwimmkörper mit mehreren Schwimmkammern ausgerüstet ist. Diese Schwimmkammern vergrößern sich von ihrem Volumen her im Allgemeinen sukzessive, und zwar je nach ihrem Abstand zum Drehpunkt der schwenkbar gelagerten erfindungsgemäßen Wasserkraftanlage. Je weiter die jeweilige Schwimmkammer von dem fraglichen Drehpunkt entfernt ist, desto größer ist ihr Volumen. Dadurch trägt die Erfindung dem Umstand Rechnung, dass mit wachsendem Abstand von dem Drehpunkt höhere Auftriebskräfte von der jeweiligen Schwimmkammer erzeugt werden müssen, um eine insgesamt gleichmäßige Verstellung der Rotoreinheit um den Drehpunkt zu erreichen. Dabei wird man im Allgemeinen die Auslegung so treffen, dass die Wasserkraftanlage bzw. deren Trog beispielsweise im Unterwasser schwimmt und teilweise in den Unterwasserspiegel eintaucht.

Die Auftriebskräfte des Schwimmkörpers lassen sich dadurch variieren, dass dem Schwimmkörper eine Trimmeinrichtung zugeordnet ist. Diese kann im einfachsten Fall so ausgestaltet sein, dass sich die einzelne Schwimmkammer oder die mehreren Schwimmkammern ganz oder teilweise fluten lassen. Jedenfalls lassen sich die an dem Trog und folglich der Wasserkraftanlage im Ganzen angreifenden Auftriebskräfte mit Hilfe der Trimmeinrichtung einstellen. Dadurch wird vorgegeben, wie tief die erfindungsgemäße Wasserkraftanlage in das Unterwasser im Beispielfall eintaucht.

In diesem Zusammenhang berücksichtigt die Erfindung, dass die Rotoreinheit zwar einerseits möglichst schräg gestellt werden muss bzw. einen möglichst großen Aufstellwinkel mit der Horizontalen beschreiben sollte, um den Ertrag an elektrischer Energie zu maximieren. Andererseits führt allerdings ein zu tiefes Eintauchen der Rotoreinheit beispielsweise in das Unterwasser dazu, dass sich an dieser Stelle sogenannte Rühr- oder Watverluste beobachten lassen. Diese Rühr- oder Watverluste resultieren daher, dass die in Rotation versetzte Rotoreinheit bzw. der an dieser Stelle meistens eingesetzte Schneckenkörper mit den einzelnen Schneckenflügeln bei zu tiefem Eintauchen in das Unterwasser zunehmend abgebremst wird. Es kommt also darauf an, mit Hilfe der Trimmeinrichtung den Aufstellwinkel möglichst groß einzustellen und zugleich die Rühr- oder Watverluste gering.

Im Rahmen der beschriebenen mechanischen Regelung kann nun diese Trimmung einmalig durchgeführt werden, indem die Auftriebskräfte fest vorgegeben werden. Dadurch ändert sich die Eintauchtiefe der Rotoreinheit in das Unterwasser im Beispielfall nicht oder kaum, und zwar selbst bei sich ändernden Aufstellwinkeln. Zugleich ist die mechanisch arbeitende Regelung in der Lage, einer Änderung des Unterwasserspiegels derart folgen zu können, dass der Aufstellwinkel entsprechend angepasst wird.

In diesem Zusammenhang ist also die bereits angesprochene Selbstregelung dergestalt realisiert, dass der Aufstellwinkel laufend an die Führungsgröße für den Aufstellwinkel in dem Sinne angepasst wird, dass nämlich das im Unterwasser aufschwimmende untere Ende des Troges einer wechselnden Höhe des Unterwasserspiegels im Sinne der mechanischen Regelung folgt und gleichzeitig der Aufstellwinkel entsprechend geändert wird. Der Sollwert für den Aufstellwinkel resultiert also aus dem sich ändernden Unterwasserspiegel. Da der Trog in dem Unterwasserspiegel aufschwimmt, folgt der Istwert für den Aufstellwinkel dem vorerwähnten Sollwert.

Im Ergebnis wird eine Wasserkraftanlage zum Erzeugen elektrischer Energie zur Verfügung gestellt, welche eine regelnde Anpassung des Aufstellwinkels an unterschiedliche Betriebsbedingungen zur Verfügung stellt. Dabei kann sowohl mit einer rein mechanisch arbeitenden Regelung gearbeitet werden als auch mit einer elektronischen Regelung. Die mechanische Regelung sieht allgemein einen Schwimmkörper vor, welcher eine Anpassung des Ausflussbereiches bzw. unteren Endes des Troges mit der darin befindlichen Rotoreinheit an den Unterwasserspiegel ermöglicht. Das geschieht gleichsam automatisch und im Sinne einer Selbstregelung.

Daneben ist natürlich auch eine elektronische Regelung denkbar. In diesem Fall werden in Abhängigkeit von Eingangswerten eines Sensors von der Regeleinheit eine oder werden mehrere Stelleinrichtungen beaufschlagt, um den von der Regeleinheit vorgegebenen Aufstellwinkel als Führungsgröße tatsächlich einstellen können. Die vorerwähnten Stelleinrichtungen können elektrisch, pneumatisch, mechanisch, hydraulisch oder im Sinne einer Kombination arbeiten. Außerdem sind ergänzende und optionale Führungseinrichtungen denkbar, um eine einwandfreie Führung der erfindungsgemäßen Wasserkraftanlage bei dem beschriebenen Schwenkvorgang zur Verfügung zu stellen.

Der Drehpunkt, um welchen die Rotoreinheit schwenkbar gelagert ist, kann sich nahe oder im Bereich des Oberwasserspiegels befinden. Es ist aber auch möglich, dass der Drehpunkt nahe oder im Bereich des Unterwasserspiegels angesiedelt ist. Grundsätzlich lässt sich die gesamte Rotoreinheit auch parallel verschieben. Das ist beispielsweise bei extremen Hochwasserverhältnissen erforderlich oder um einen Hochwasserschutz zu bewerkstelligen bzw. die Wasserkraftanlage vor Hochwasserschäden zu schützen. Das kann erneut mit Hilfe der einen oder der mehreren Stelleinrichtungen erfolgen, wobei auch in diesem Fall die eine oder die mehreren Führungseinrichtungen für die erforderliche und notwendige Führung des Troges bzw. der Wasserkraftanlage sorgen.

Im Ergebnis wird eine optimierte Ausbeute an elektrischer Energie auch bei verschiedenen Wasserständen im Unterwasser und/oder Oberwasser beobachtet. Außerdem kann die Lage des unteren Endes des Troges bzw. des Ausflussbereiches optimiert werden. Dadurch steht insgesamt ein erhöhter Ertrag an elektrischer Energie ausgangsseitig zur Verfügung. Außerdem ermöglicht die beschriebene Verstellung der Rotoreinheit bzw. der Wasserkraftanlage im Ganzen einen Hochwasserschutz. Hierzu trägt ergänzend bei, dass zumindest bei der mechanisch arbeitenden Regelung der Trog aufschwimmt und folglich automatisch vor etwaigen Hochwasserschäden geschützt ist. Hinzu kommt eine im Vergleich zum Stand der Technik geringere Geräuschemission. Zugleich kann die Gangfüllung gegenüber dem Stand der Technik erhöht werden, so dass die Leistung nochmals gesteigert ist.

Im Folgenden wird die Erfindung anhand einer lediglich ein Ausführungsbeispiel darstellenden Zeichnung näher erläutert. Die Fig. 1 zeigt eine erfindungsgemäße Wasserkraftanlage schematisch. In der Fig. 2 ist ein Ertrag E gegenüber einer Höhendifferenz F zwischen dem Oberwasserspiegel und Unterwasserspiegel dargestellt. Die Fig. 3 zeigt die Abhängigkeit des Ertrages E vom Aufstellwinkel α.

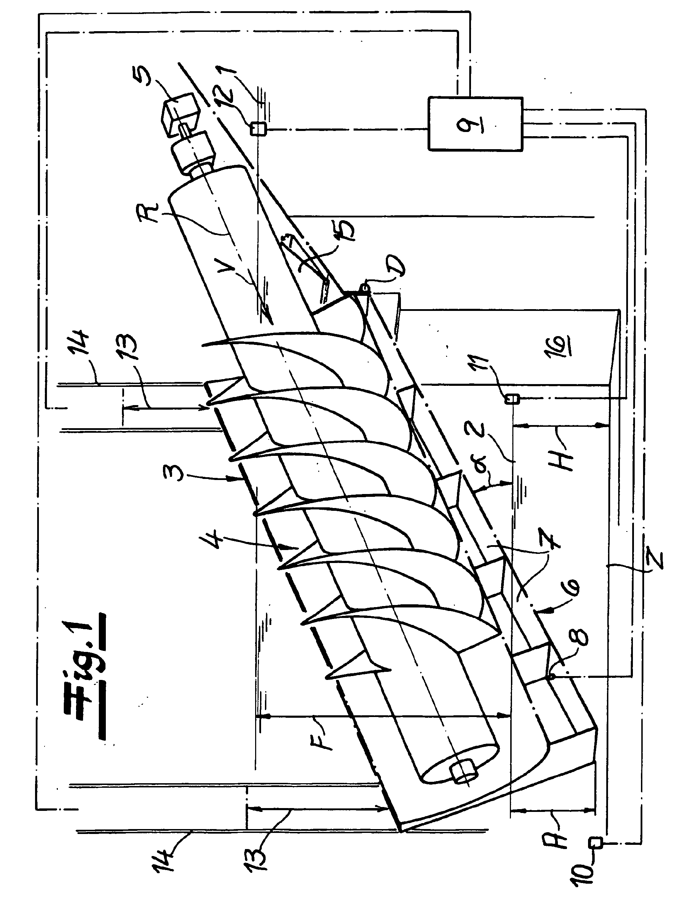

In der Fig. 1 ist eine Wasserkraftanlage dargestellt, die zum Erzeugen elektrischer Energie durch Umwandlung von Strömungsenergie eines strömenden Gewässers dient. Bei dem Gewässer handelt es sich vorliegend um einen Fluss, welcher an einem Wehr oder allgemein an einer Stufe angestaut ist. Folgerichtig beobachtet man einen Oberwasserspiegel 1 und einen Unterwasserspiegel 2. Die Wasserkraftanlage verfügt in ihrem grundsätzlichen Aufbau über einen Trog 3, welcher eine Rotoreinheit 4 ganz oder teilweise umschließt. Bei der Rotoreinheit 4 handelt es sich um einen Schneckenkörper 4 mit einzelnen Schneckengängen. Die Schneckengänge verfügen über Gangfüllungen an Wasser, die dadurch entstehen, dass das Wasser des Flusses vom Oberwasserspiegel 1 ausgehend über das obere Ende in den Trog 3 einströmt und den Trog 3 am unteren Ende bzw. im Bereich des Unterwasserspiegels 2 wieder verlässt. Das Wasser füllt die einzelnen Schneckengänge und gleitet unter Einwirkung der Schwerkraft im Trog 3 abwärts. Dabei wird eine Schubkraft auf die einzelnen Schneckengänge ausgeübt, welche den Schneckenkörper 4 in Drehungen versetzt.

Da der Schneckenkörper 4 beispielsweise achsgleich mit einem Generator 5 zusammenwirkt bzw. der Generator 5 achsgleich an den Schneckenkörper 4 angeschlossen ist, folgt der Generator 5 den Drehungen des Schneckenkörpers 4 und erzeugt auf diese Weise ausgangsseitig die gewünschte elektrische Energie.

Die gesamte Rotoreinheit bzw. der Schneckenkörper 4 lässt sich um zumindest einen Drehpunkt D verschwenken. Dadurch stellt sich ein variierender Aufstellwinkel α ein. Dieser Aufstellwinkel α wird zwischen einer Rotorachse R des Schneckenkörpers 4 und des Generators 5 einerseits und einer Horizontalen andererseits eingeschlossen. Die Horizontale fällt regelmäßig mit dem Oberwasserspiegel 1 und dem Unterwasserspiegel 2 zusammen, die angenähert und idealerweise parallel zueinander angeordnet sind. Jedenfalls lässt sich die gesamte Rotoreinheit respektive der Schneckenkörper 4 um den Drehpunkt D unter Änderung des Aufstellwinkels α verschwenken, und zwar zwischen dem Oberwasserspiegel 1 und dem Unterwasserspiegel 2.

Die veränderbare Einstellung des Aufstellwinkels α erfolgt nun erfindungsgemäß im Sinne einer Regelung. Dazu ist im Rahmen des Ausführungsbeispiels eine mechanische Regelung realisiert. Tatsächlich verfügt der an dieser Stelle vorgesehene mechanisch arbeitende Regelkreis über einen Schwimmkörper 6, mit dessen Hilfe der Aufstellwinkel α in Abhängigkeit vom Unterwasserspiegel 2 im gezeigten Beispiel im Sinne einer Selbstregelung variiert wird.

Der Schwimmkörper 6 setzt sich aus einzelnen Schwimmkammern 7 zusammen. Man erkennt, dass sich das Volumen der Schwimmkammem 7 sukzessive mit zunehmendem Abstand von dem Drehpunkt D vergrößert. Dadurch trägt die Erfindung dem Umstand Rechnung, dass die jeweilige Schwimmkammer 7 mit wachsendem Abstand vom Drehpunkt D ein größeres Drehmoment durch zugehörige Auftriebskräfte aufbringen muss als Schwimmkammem 7, die näher zum Drehpunkt D angeordnet sind. Nur angedeutet sind dann noch ein oder mehrere Trimmeinrichtungen 8, bei denen es sich im Ausführungsbeispiel um simple Ventile 8 handelt.

Mit Hilfe dieser Ventile oder Trimmeinrichtungen 8 lässt sich die Auftriebskraft des Schwimmkörpers 6 bzw. die Auftriebskraft der einzelnen Schwimmkammern 7 einstellen. Auf diese Weise kann vorgegeben werden, wie weit das untere Ende des Troges 3 in das Unterwasser eintaucht bzw. welchen Abstand A die untere Kante des Troges 3 vom Unterwasserspiegel 2 aufweist. Dieser Abstand A ist insofern relevant, als ein großer Abstand A dazu korrespondiert, dass die Rotoreinheit bzw. der Schneckenkörper 4 tief in das Unterwasser eintaucht und relativ große Rühr- oder Watverluste beobachtet werden.

Umgekehrt versucht man den Abstand A natürlich nicht zu gering zu bemessen, weil dann der Aufstellwinkel α übergebührlich klein wird. Ein kleiner Aufstellwinkel α korrespondiert nun aber zu einer geringeren Höhendifferenz zwischen dem unteren Ende und dem oberen Ende des Troges 3 und folglich zu einer verringerten Ausbeute an elektrischer Energie und demzufolge einem verminderten monetären Ertrag E.

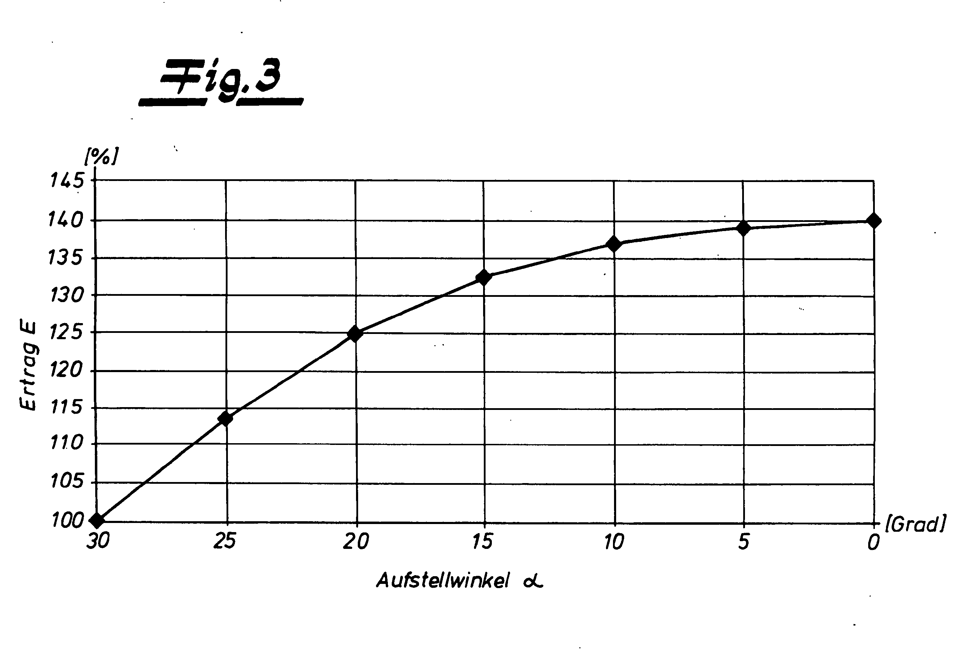

Dieser Zusammenhang wird bei Betrachtung der Fig. 3 deutlich, welche den besagten Ertrag E gegenüber dem Aufstellwinkel α beispielhaft verdeutlicht. Man erkennt, dass der Ertrag E bei nahezu horizontaler Ausrichtung der Rotoreinheit bzw. des Schneckenkörpers 4 und des Generators 5 am größten ist (Aufstellwinkel α ungefähr 0°). Denn dann erhöht sich die sogenannte Schluckmenge und folglich die Gangfüllung der einzelnen Schneckengänge. Steigt dagegen der Aufstellwinkel auf Werte von beispielsweise α ungefähr 30° an, so sinkt der Ertrag E, weil sich die Schluckmenge und folglich die Gangfüllung verringert. Dabei muss selbstverständlich berücksichtigt werden, dass die Fig. 3 letztlich rein den Ertrag E bzw. die damit zusammenhängende Schluckmenge in Abhängigkeit vom Aufstellwinkel α zeigt, ohne zusätzliche Effekte wie beipsielsweise eine mit dem Aufstellwinkel α zwingend verbundene Höhendifferenz F zwischen dem Oberwasserspiegel 1 und dem Unterwasserspiegel 2 zu berücksichtigen.

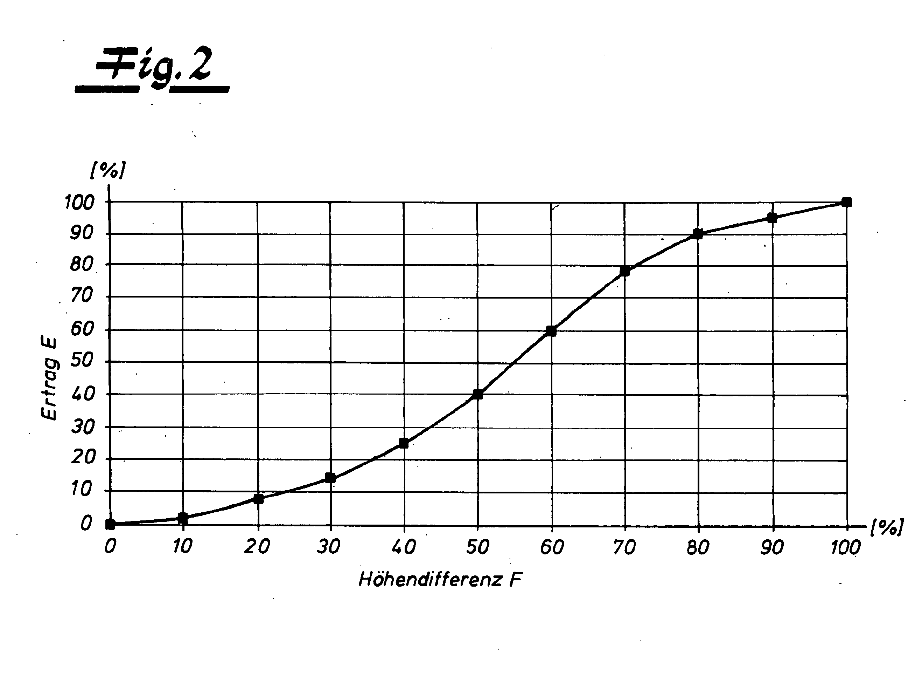

Die Abhängigkeit des Ertrages E von der besagten Höhendifferenz ist in der Fig. 2 dargestellt. Dabei korrespondiert die Höhendifferenz F von 100 % zu einer Nenn-Höhendifferenz F, für welche die fragliche Wasserkraftanlage ausgelegt ist. Das heißt, die Wasserkraftanlage erreicht einen Nenn-Ertrag E von 100 % für den Fall, dass die Höhendifferenz F zwischen dem Oberwasserspiegel 1 und dem Unterwasserspiegel 2 einen bestimmten und vorgegebenen Wert erreicht. Das hängt selbstverständlich von den konstruktiven Gegebenheiten ab. Dabei macht die Fig. 2 deutlich, dass bei verringerter Höhendifferenz, das heißt beispielsweise ansteigendem Unterwasserspiegel 2 gegenüber dem Oberwasserspiegel 1 der Ertrag E sinkt. Das lässt sich im Kem darauf zurückführen, dass die Fallhöhe zwischen dem Oberwasserspiegel 1 und dem Unterwasserspiegel 2 ebenfalls verringert ist und folglich auch die Energieausbeute bzw. der Ertrag E.

Dabei müssen selbstverständlich beide Abhängigkeiten nach den Fig. 2 und 3 zusammen betrachtet werden. So führt ein gestiegener Unterwasserspiegel 2 einerseits dazu, dass die Schluckmenge und folglich der Ertrag E entsprechend der Fig. 3 größer werden. Umgekehrt sorgt aber die mit dem beschriebenen Anstieg des Unterwasserspiegels 2 ebenfalls einhergehende verringerte Höhendifferenz F dafür, dass der Ertrag E sinkt. Der Ertrag E hängt also sowohl von dem Aufstellwinkel α als auch der Höhendifferenz F im Sinne von E (α, F) ab. Je nach dem "räumlichen Verlauf" dieser dreidimensionalen Funktion E (α, F) steigt der Ertrag E an, bleibt konstant oder sinkt unter Berücksichtigung der Gegebenheiten, insbesondere in Abhängigkeit vom Aufstellwinkel α sowie der Höhendifferenz F. Zusätzlich ist zu berücksichtigen, dass der Ertrag E auch vom Abstand A und den damit einhergehenden Wartverlusten abhängt. Das heißt, der Ertrag E ist eine Funktion von dem Aufstellwinkel α, der Höhendifferenz F und dem Abstand A im Sinne von E (α, A, F).

Jedenfalls wird im Allgemeinen und zunächst der Schwimmkörper 6 so getrimmt, dass vorgegebene Watverluste zu einem maximal möglichen Aufstellwinkel α und folglich einem maximalen Ertrag E an elektrischer Energie ausgangsseitig des Generators 5 korrespondieren. Dabei ist es denkbar, dieses Trimmen mit Hilfe der einen oder mehreren Trimmeinrichtungen 8 vorzunehmen. Die Trimmeinrichtung 8 kann in diesem Zusammenhang permanent oder intermittierend arbeiten. So ist es grundsätzlich denkbar, die eine oder die mehreren Trimmeinrichtungen 8 einmalig beim Einbau der erfindungsgemäßen Wasserkraftanlage so einzustellen, dass der Abstand A fix vorgegeben wird. Alternativ hierzu lässt sich aber auch der Abstand A variieren, und zwar ebenfalls im Sinne einer Regelung. Zu diesem Zweck mag zusammenfassend eine Regeleinheit 9 realisiert sein, die auch bei einer alternativen elektronischen Regelung zum Einsatz kommt.

Der Ertrag E wird - bei angenommener Konstanz der Höhendifferenz F - also in Abhängigkeit vom Aufstellwinkel α und dem Abstand A optimiert. Das bedeutet, dass die Funktion E (α, A) im Hinblick auf einen maximalen Wert für den Ertrag E untersucht wird. Dabei versteht es sich, dass die Werte der Funktion E (α, A) im Beispielfall und im Vorfeld für die jeweils betrachtete Wasserkraftanlage bestimmt werden. Das kann im Zuge eines Kalibriervorganges erfolgen. Diese Werte E (α, A) werden in der Regeleinheit 9 als charakteristische Daten der Wasserkraftanlage abgelegt.

Vergleichbares gilt für die zuvor bereits behandelten Abhängigkeiten E (α, F) bzw. E (α, A, F). Ähnliche Abhängigkeiten und Kalibrierdaten liegen auch für eine zuströmende Wassermenge V und schließlich eine Höhe H des Unterwasserspiegels 2 gegenüber einer Referenzlinie Z vor. Das heißt, in der Regeleinheit 9 sind die gesamten Abhängigkeiten im Sinne von E (α, A, H, V, F) hinterlegt. Für die folgenden Betrachtungen wird zunächst davon ausgegangen, dass die zuströmende Wassermenge V und die Höhendifferenz F zwischen dem Oberwasserspiegel 1 und dem Unterwasserspiegel 2 konstant bleiben. Das ist realistisch, weil regelmäßig Oberwasserspiegel 1 und Unterwasserspiegel 2 zugleich sinken (oder steigen).

Wenn nun beispielsweise der Unterwasserspiegel 2 sinkt und folglich sich dessen Höhe H gegenüber der Referenzlinie Z verringert, muss der Aufstellwinkel α entsprechend nachgefahren werden. Das Gleiche gilt für den Abstand A bzw. die Eintauchtiefe des Troges 3 in den Unterwasserspiegel 2. Zu diesem Zweck findet eine Optimierung der Funktion E (α, A, H) statt. D. h., anhand des gemessenen "neuen" Unterwasserspiegels 2 und dem hierzu gehörigen Wert für die Höhendifferenz H errechnet die Regeleinheit 9 eine Führungsgröße für den Aufstellwinkel α. Dies mag bei angenommenem oder konstant gehaltenem Abstand A erfolgen. Zu diesem Zweck wird die Funktion E (α, A, H) im Beispielfall dahingehend untersucht, für welche Werte von α der Ertrag E unter Berücksichtigung der vorgegebenen Werte für A und H maximal wird. Dieser Wert für den Aufstellwinkel α stellt die Führungsgröße dar. Anhand dieser Vorgaben wird im Anschluss daran seitens der Regeleinheit 9 die Rotoreinheit 4 entsprechend verstellt bis der vorgegebene Sollwert für den Aufstellwinkel α erreicht wurde. Selbstverständlich kann die Verstellung auch automatisch erfolgen.

Alternativ hierzu kann aber auch der Abstand A mit Hilfe der Regeleinheit 9 verändert werden. Dann wird man die Funktion E (α, A, H) unter Berücksichtigung eines vorgegebenen oder beibehaltenen Wertes für den Aufstellwinkel α sowie der gemessenen Höhendifferenz H erneut dahingehend untersuchen, für welchen Wert des Abstandes A sich ein Maximum des Ertrages E einstellt. Dieser Wert für den Abstand A gibt die Führungsgröße vor, anhand derer der Abstand A dann mit Hilfe der Regeleinheit 9 tatsächlich angepasst wird.

Die Regeleinheit 9 ist Bestandteil eines elektronisch arbeitenden Regelkreises. Die Regeleinheit 9 mag hierzu beispielsweise mit einem Sensor 10 ausgerüstet sein, welcher den Abstand A misst. Je nach den beschriebenen Vorgaben kann die Regeleinheit 9 die Trimmeinrichtung 8 regelnd einstellen, um den zuvor als Sollwert ermittelten Abstand A im Sinne eines Soll-/Istwertvergleiches einzustellen. Dazu wird im Rahmen des Beispiels die Trimmeinrichtung 8 entsprechend beaufschlagt.

Im Rahmen der alternativen Vorgehensweise zur variablen Einstellung des Aufstellwinkels α dient der elektronisch arbeitende Regelkreis dazu, den fraglichen Aufstellwinkel α elektrisch regelnd einzustellen. Zu diesem Zweck ist neben dem bereits angesprochenen Sensor 10 zur Messung des Abstandes A ein weiterer Sensor 11 vorgesehen, mit dessen Hilfe der Unterwasserspiegel 2 bzw. seine Höhe H gegenüber der Referenzlinie Z gemessen wird. Sobald der Unterwasserspiegel 2 sinkt und folglich die Höhe H abnimmt, registriert dies der Sensor 11 und übermittelt entsprechende Eingangswerte bzw. Messgrößen an die Regeleinheit 9. In der Regeleinheit 9 sind nun die charakteristischen Daten der erfindungsgemäßen Wasserkraftanlage wie beschrieben hinterlegt.

Bei diesen charakteristischen Daten handelt es sich nicht nur um die Abhängigkeit des Ertrages E von dem Aufstellwinkel α, also E (α), sondern spiegelt sich auch die Abhängigkeit vom Wert A bzw. der Eintauchtiefe des unteren Endes des Troges 3 in das Unterwasser wider. Außerdem wird die zuströmende Wassermenge V berücksichtigt, welche mit einem weiteren Sensor 12 gemessen werden mag. Im Ergebnis hängt folglich der Ertrag E an elektrischer Energie im Endeffekt vom Aufstellwinkel α, der Eintauchtiefe des Troges 3 in das Unterwasser bzw. dem Abstand A, dem Unterwasserspiegel 2 respektive dessen Höhe H gegenüber der Referenzlinie Z, der zuströmenden Wassermenge V und schließlich den Höhenunterschied F zwischen dem Oberwasserspiegel 1 und dem Unterwasserspiegel 2 ab. Eine Abhängigkeit des Ertrages E im Sinne von E (α, A, H, V, F) liegt also vor.

In der Regeleinheit 9 sind nun ein oder mehrere Kurvenscharen hinterlegt, die in Abhängigkeit von den zuvor beschriebenen Messgrößen für α, A, H, V und F einen jeweils maximalen Ertrag E aufzeigen bzw. diese mehrdimensionale Funktion darstellen. Die Regelung mit Hilfe der Regeleinheit 9 beispielsweise des Aufstellwinkels α wird nun so vorgenommen, dass die betreffende Funktion E (α, A, H, V, F) unter Berücksichtigung der anderen Messgrößen außer α, also der Messgrößen für A, H, V und F dahingehend untersucht wird, dass ein maximaler Ertrag E vorliegt.

Aus diesem maximalen Ertrag E (α, A, H, V, F) wird nun eine Führungsgröße für den Aufstellwinkel α durch die Regeleinheit 9 vorgegeben. Die betreffende Situation korrespondiert also zu einem bestimmten und unter den gegebenen Umständen optimalen Aufstellwinkel α unter Berücksichtigung einer Maximierung des Ertrages E an elektrischer Energie. Folgerichtig ermittelt die Regeleinheit 9 die zugehörige Führungsgröße für den Aufstellwinkel α.

Unter Berücksichtigung dieser Führungsgröße für den Aufstellwinkel α werden nun im Beispielfall zwei Stelleinrichtungen 13 von der Regeleinheit 9 beaufschlagt, mit deren Hilfe der zuvor von der Regeleinheit 9 ermittelte und für den Anwendungsfall optimale Aufstellwinkel α eingestellt wird. Zu diesen Stelleinrichtungen 13 gehören Führungseinrichtungen 14. Im Allgemeinen handelt es sich um kombinierte Stell/Führungseinrichtungen 13, 14. Diese mögen überwiegend in linearer Richtung arbeiten und sorgen im Endeffekt dafür, dass der Trog 3 mit der im Innern befindlichen Rotoreinheit bzw. dem Schneckenkörper 4 den gewünschten Aufstellwinkel α gegenüber dem Drehpunkt D einnimmt, wie er von der Regeleinheit 9 vorgegeben wird. Dazu können die Stell/Führungseinrichtungen 13, 14 mechanisch, pneumatisch, hydraulisch etc. beaufschlagt und betätigt werden.

Nicht dargestellt ist die weitere Möglichkeit, auch die Zuflussmenge bzw. die zuströmende Wassermenge V zu der erfindungsgemäßen Wasserkraftanlage im Sinne einer Regelung einzustellen. Hier ist es denkbar, beispielsweise am oberen Ende des Troges 3 eine verstellbare Klappe 15 vorzusehen. Diese Klappe 15 kann wie die anderen bereits behandelten Größen in die Regelung mit einbezogen werden. Tatsächlich lässt sich mit Hilfe der verstellbaren Klappe 15 die Wassermenge V variieren.

Anhand der Figur erkennt man, dass der gesamte Trog 3 auf einem Fundament bzw. einer Basis 16 ruht. Dabei mag für die Verschwenkbarkeit des Troges 3 gegenüber dieser Basis 16 um den Drehpunkt D dergestalt gesorgt werden, dass an dem Trog 3 beispielsweise außenseitig Flansche angeordnet sind, die mit einem Bolzen untereinander verbunden sind, welcher die Drehachse D definiert. Das ist selbstverständlich nur beispielhaft und nicht zwingend zu verstehen. Der Drehpunkt D findet sich nach dem Ausführungsbeispiel im Bereich des Oberwassers unterhalb des Oberwasserspiegels 1. Genauso gut könnte der Drehpunkt D aber auch im Bereich des Unterwassers unterhalb oder auch oberhalb des Unterwasserspiegels 2 angeordnet sein.

## Patentansprüche

1. Verfahren zum Betrieb einer Wasserkraftanlage im Zuge der Erzeugung elektrischer Energie durch Umwandlung von Strömungsenergie eines strömenden Gewässers, wobei
- die Wasserkraftanlage mit wenigstens einer Rotoreinheit (4) und einem von der Rotoreinheit (4) angetriebenen Generator (5) ausgerüstet ist, wobei ferner
- ein Trog (3) vorgesehen ist, welcher die Rotoreinheit (4) ganz oder teilweise umschließt, und wobei
- die Rotoreinheit (4) um zumindest einen Drehpunkt (D) unter Einstellung eines variierenden Aufstellwinkels (α) zwischen einem Oberwasserspiegel (1) und einem Unterwasserspiegel (2) schwenkbar gelagert ist,
**dadurch gekennzeichnet, dass**
nicht nur der Aufstellwinkel (α), sondern auch eine Eintauchtiefe (A) des Troges (3) in das Unterwasser im Sinne einer Regelung eingestellt werden.

2. Verfahren nach Anspruch 1, **dadurch gekennzeichnet, dass** die zuströmende Wassermenge (V) im Sinne einer Regelung eingestellt wird.

3. Verfahren nach Anspruch 1 oder 2, **dadurch gekennzeichnet, dass** die Regelung für den Aufstellwinkel (α) durch Vergleich mit einer Führungsgröße erfolgt, welche aus einer oder mehreren Messgrößen abgeleitet wird.

4. Verfahren nach Anspruch 3, **dadurch gekennzeichnet, dass** als Messgröße eine Höhendifferenz (F) zwischen dem Oberwasserspiegel (1) und dem Unterwasserspiegel (2) und/oder der Oberwasserspiegel (1) und/oder der Unterwasserspiegel (2) und/oder die zuströmende Wassermenge (V) und/oder der Ertrag (E) an elektrischer Energie etc. eingesetzt wird.

5. Verfahren nach einem der Ansprüche 1 bis 4, **dadurch gekennzeichnet, dass** die Regelung im Rahmen eines mechanisch und/oder elektronisch arbeitenden Regelkreises erfolgt.

6. Verfahren nach Anspruch 5, **dadurch gekennzeichnet, dass** der mechanisch arbeitende Regelkreis einen Schwimmkörper (6) aufweist, mit dessen Hilfe der Aufstellwinkel (α) im Sinne einer Selbstregelung variiert wird.

7. Verfahren nach Anspruch 6, **dadurch gekennzeichnet, dass** der Schwimmkörper (6) in einen die Rotoreinheit (4) ganz oder teilweise umschließenden Trog (3) integriert ist.

8. Verfahren nach Anspruch 6 oder 7, **dadurch gekennzeichnet, dass** der Schwimmkörper (6) mit sich je nach ihrem Abstand vom Drehpunkt (D) sukzessive vergrößernden Schwimmkammern (7) ausgerüstet ist.

9. Verfahren nach einem der Ansprüche 6 bis 8, **dadurch gekennzeichnet, dass** der Schwimmkörper (6) wenigstens eine Trimmeinrichtung (8) aufweist.

10. Verfahren nach Anspruch 9, **dadurch gekennzeichnet, dass** die Trimmeinrichtung (8) permanent oder intermittierend arbeitet.

11. Verfahren nach einem der Ansprüche 5 bis 10, **dadurch gekennzeichnet, dass** der elektronisch arbeitende Regelkreis wenigstens einen Sensor (10, 11, 12) aufweist, mit dessen Hilfe beispielsweise die Höhendifferenz (F) zwischen dem Oberwasserspiegel (1) und dem Unterwasserspiegel (2) und/oder der Oberwasserspiegel (1) und/oder der Unterwasserspiegel (2) und/oder die zuströmende Wassermenge (V) und/oder der Ertrag (E) an elektrischer Energie etc. gemessen werden.

12. Verfahren nach Anspruch 11, **dadurch gekennzeichnet, dass** der Sensor (10, 11, 12) an eine Regeleinheit (9) angeschlossen ist, welche unter Berücksichtigung von Eingangswerten des Sensors (10, 11, 12) sowie gegebenenfalls abgelegter charakteristischer Daten die Führungsgröße für den Aufstellwinkel (α) vorgibt.

13. Verfahren nach einem der Ansprüche 1 bis 12, **dadurch gekennzeichnet, dass** der Aufstellwinkel (α) mittels einer oder mehrerer Stelleinrichtungen (13) und/oder Führungseinrichtungen (14) variiert wird.

## Claims

1. A method for operating a hydroelectric power plant in the course of the generation of electrical energy by conversion of flow energy of a flowing body of water, wherein
- the hydroelectric power plant is equipped with at least one rotor unit (4) and a generator (5) driven by the rotor unit (4), wherein further
- a trough (3) is provided, which surrounds the rotor unit (4) entirely or partially, and wherein
- the rotor unit (4) is pivotably mounted about at least one pivot point (D) with the setting of a varying installation angle (α) between an upper water level (1) and a lower water level (2),
**characterised in that**
not only the installation angle (α), but also an immersion depth (A) of the trough (3) into the lower water can be set in the sense of a control.

2. The method according to Claim 1, **characterised in that** the inflowing water volume (V) is set in the sense of a control.

3. The method according to Claim 1 or 2, **characterised in that** the control for the installation angle (α) takes place by means of comparison with a reference value which is derived from one or a plurality of measured values.

4. The method according to Claim 3, **characterised in that** a height difference (F) between the upper water level (1) and the lower water level (2) and/or the upper water level (1) and/or the lower water level (2) and/or the inflowing water volume (V) and/or the yield (E) of electrical energy, etc. is used as measured value.

5. The method according to one of Claims 1 to 4, **characterised in that** the control takes place in the context of a mechanically and/or electronically operating control loop.

6. The method according to Claim 5, **characterised in that** the mechanically operating control loop has a floating body (6), with the aid of which the installation angle (α) can be varied in the sense of an automatic control.

7. The method according to Claim 6, **characterised in that** the floating body (6) is integrated into a trough (3) surrounding the rotor unit (4) completely or partially.

8. The method according to Claim 6 or 7, **characterised in that** the floating body (6) is equipped with floatation chambers (7) which increase in size depending on the distance thereof from the pivot point (D).

9. The method according to one of Claims 6 to 8, **characterised in that** the floating body (6) has at least one trimming device (8).

10. The method according to Claim 9, **characterised in that** the trimming device (8) operates permanently or intermittently.

11. The method according to one of Claims 5 to 10, **characterised in that** the electronically operating control loop has at least one sensor (10, 11, 12) with the aid of which for example the height difference (F) between the upper water level (1) and the lower water level (2) and/or the upper water level (1) and/or the lower water level (2) and/or the inflowing water volume (V) and/or the yield (E) of electrical energy, etc. are measured.

12. The method according to Claim 11, **characterised in that** the sensor (10, 11, 12) is connected to a control unit (9) which predetermines the reference value for the installation angle (α) taking account of input values of the sensor (10, 11, 12) and also characteristic data which is stored if appropriate.

13. The method according to one of Claims 1 to 12, **characterised in that** the installation angle (α) is varied by means of one or a plurality of adjustment devices (13) and/or guide devices (14).

## Revendications

1. Procédé destiné à faire fonctionner une installation hydroélectrique au cours de la production d'énergie électrique par transformation de l'énergie d'un courant d'eaux s'écoulant, pour lequel
- l'installation hydroélectrique est équipée d'au moins un ensemble de rotor (4) et d'un générateur (5) entraîné par l'ensemble de rotor (4), pour lequel en outre
- un bac (3) est prévu, lequel enveloppe, entièrement ou partiellement, l'ensemble de rotor (4) et pour lequel
- l'ensemble de rotor (4) est monté de façon pivotable autour d'au moins un point de rotation (D) par réglage d'un angle de mise en place (α) variable entre un niveau d'eau d'amont (1) et un niveau d'eau d'aval (2),
**caractérisée en ce que**
non seulement l'angle de mise en place (α), mais également une profondeur d'immersion (A) du bac (3) dans l'eau d'aval sont réglés dans l'esprit d'une régulation.

2. Procédé selon la revendication 1 **caractérisée en ce que** la quantité d'eau (V) affluant est réglée dans l'esprit d'une régulation.

3. Procédé selon la revendication 1 ou 2 **caractérisée en ce que** la régulation pour l'angle de mise en place (α) a lieu par comparaison avec une valeur de référence qui est dérivée d'une ou plusieurs valeurs de mesure.

4. Procédé selon la revendication 3 **caractérisée en ce qu'**on utilise comme valeur de mesure une différence de hauteur (F) entre le niveau d'eau d'amont (1) et le niveau d'eau d'aval (2) et/ou le niveau d'eau d'amont (1) et/ou le niveau d'eau d'aval (2) et/ou la quantité d'eau (V) affluant et/ou le rendement (E) en énergie électrique etc.

5. Procédé selon une des revendications 1 à 4 **caractérisée en ce que** la régulation a lieu dans le cadre d'un circuit de régulation fonctionnant mécaniquement et/ou électriquement.

6. Procédé selon la revendication 5 **caractérisée en ce que** le circuit de régulation fonctionnant mécaniquement comporte un corps flottant (6) à l'aide duquel l'angle de mise en place (α) est varié dans l'esprit d'une autorégulation.

7. Procédé selon la revendication 6 **caractérisée en ce que** le corps flottant (6) est intégré dans un bac (3) enveloppant entièrement ou partiellement l'ensemble de rotor (4).

8. Procédé selon une des revendications 6 ou 7 **caractérisée en ce que** le corps flottant (6) est équipé de chambres flottantes (7) s'agrandissant successivement en fonction de leur éloignement du point de rotation (D).

9. Procédé selon une des revendications 6 à 8 **caractérisée en ce que** le corps flottant (6) comporte au moins un système d'équilibrage (8).

10. Procédé selon la revendication 9 **caractérisée en ce que** le système d'équilibrage (8) fonctionne de façon permanente ou par intermittence.

11. Procédé selon une des revendications 5 à 10 **caractérisée en ce que** le circuit de régulation fonctionnant électroniquement comporte au moins un capteur (10, 11, 12) à l'aide duquel on mesure par exemple la différence de hauteur (F) entre le niveau d'eau d'amont (1) et le niveau d'eau d'aval (2) et/ou le niveau d'eau d'amont (1) et/ou le niveau d'eau d'aval (2) et/ou la quantité d'eau affluant (V) et/ou le rendement (E) en énergie électrique etc.

12. Procédé selon la revendication 11 **caractérisée en ce que** le capteur (10, 11, 12) est raccordé à une unité de régulation (9) qui attribue la valeur de référence de l'angle de mise en place (α) en prenant en considération des valeurs d'entrée du capteur (10, 11, 12) ainsi que des données caractéristiques mémorisées le cas échéant.

13. Procédé selon une des revendications 1 à 12 **caractérisée en ce que** l'angle de mise en place (α) est varié au moyen d'un ou plusieurs dispositifs de réglage (13) et/ou dispositifs de guidage (14).
